(19) **Europäisches Patentamt European Patent Office Office européen des brevets**

(11) **EP 4 625 806 A1**

(12) **EUROPEAN PATENT APPLICATION**
published in accordance with Art. 153(4) EPC

(43) Date of publication:
**01.10.2025 Bulletin 2025/40**

(21) Application number: **23894917.6**

(22) Date of filing: **15.11.2023**

(51) International Patent Classification (IPC):
*H02P 6/182* (2016.01)  *H02P 6/10* (2006.01)

(52) Cooperative Patent Classification (CPC):
**H02P 6/10; H02P 6/182**

(86) International application number:
**PCT/KR2023/018376**

(87) International publication number:
**WO 2024/111988 (30.05.2024 Gazette 2024/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.11.2022 KR 20220159207**
**18.10.2023 KR 20230139762**

(71) Applicant: **LX Semicon Co., Ltd.**
**Daejeon 34027 (KR)**

(72) Inventors:
- **MIN, Chol**
**Daejeon 34027 (KR)**
- **CHOI, Jong Tae**
**Daejeon 34027 (KR)**

(74) Representative: **Ter Meer Steinmeister & Partner Patentanwälte mbB**
**Nymphenburger Straße 4**
**80335 München (DE)**

(54) **MOTOR DRIVING DEVICE, CONTROL METHOD THEREFOR, AND ELECTRONIC DEVICE DRIVEN BY MOTOR**

(57) The present invention relates to: a device applicable to a motor driving device, for example, a device for driving a direct current motor (DC motor); a control method therefor; and a device (electronic device) driven by a motor. The method for controlling a BLDC motor, according to the present invention, may comprise the steps of: extracting a stabilized motor speed according to duty so as to import stored data by means of a counter electromotive force signal received from a motor; receiving a set duty by means of a command of a user; extracting, from the data, a motor speed according to the set duty; and generating a driving signal according to the extracted motor speed.

Fig. 3

EP 4 625 806 A1

## Description

### TECHNICAL FIELD

The present invention is applicable to a motor driving device, for example, a device for driving a direct current motor (DC motor), a control method thereof, and a device (electronic device) driven by the motor.

### BACKGROUND ART

Recently, in various electronic devices including home appliances such as washing machines and refrigerators, a brushless direct current (brushless direct current, hereinafter BLDC) motor, which does not use a commutator brush and has high energy efficiency, is used.

A BLDC motor performs electronic commutation to change a current direction of a current flowing through coils of an armature, and when a position of a rotor and a commutation timing coincide, a continuous rotating magnetic field to rotate the rotor may be formed.

Such a BLDC motor is used in a wide range of fields, not only in home appliances such as refrigerators, air purifiers, and air conditioners but also in information processing devices. A BLDC motor requires a separate detection device to detect a rotational speed and a position of the rotor.

A sensorless BLDC motor driving circuit, which does not use a separate detection device such as a Hall sensor for a position detection of the rotor, may detect a position of a permanent magnet of the rotor by detecting a back electromotive force formed in coils of the motor.

A back electromotive force (BEMF) signal is a voltage or an electromotive force generated by pushing against a current inducing it. Generally, for example, when driving a BLDC motor through two of three coils of a three-phase BLDC motor, the BEMF signal may be received through an unused coil. In this case, the unused coil may be expressed as being floated.

As such, a coil of one phase may be floated to obtain the back electromotive force signal. However, such a floating process may cause an acoustic noise. Also, such a control process may degrade a response characteristic.

Therefore, a solution to solve such problems is required.

### DISCLOSURE

### TECHNICAL PROBLEM

According to one embodiment of the present invention, the present invention provides a motor driving device, a control method thereof, and an electronic device driven by the motor, which may control the motor with a fast response characteristic by using a back electromotive force sensed from the motor.

Also, according to one embodiment of the present invention, the present invention provides a motor driving device, a control method thereof, and an electronic device driven by the motor, which may control the motor without generating an acoustic noise.

Furthermore, according to another embodiment of the present invention, those skilled in the art may understand through the entire context of the specification and drawings that there may be additional technical problems not mentioned here.

### TECHNICAL SOLUTION

As a first aspect of the present invention to achieve the above-mentioned purpose, a method of controlling a BLDC motor according to the present invention includes loading data stored by extracting a stabilized motor speed according to a duty based on a back electromotive force signal received from the motor; receiving a set duty based on a command by a user; extracting a motor speed according to the set duty from the data; and generating a driving signal according to the extracted motor speed.

In an exemplary embodiment, the data may include a stabilized speed according to a command corresponding to an inflection point of an operating range of the motor.

In an exemplary embodiment, the data may be received by a temporarily unused coil among three-phase coils connected to the motor.

In an exemplary embodiment, the extracting the motor speed may comprise calculating by a linear interpolation of the data including the speed according to the duty.

In an exemplary embodiment, the set duty based on the command by the user may be set according to an operating level of a device equipped with the motor.

In an exemplary embodiment, the data may be stored as a lookup table.

As a second aspect of the present invention to achieve the above-mentioned purpose, a motor driving device according to the present invention includes an inverter configured to deliver a driving signal to a motor; a current/voltage sensing part configured to sense at least one of a current and a voltage of the motor; a controller configured to control the inverter, wherein the controller is configured, in response to a set duty based on a command by a user, to load data stored by extracting a stabilized motor speed according to a duty based on a back electromotive force signal received from the motor, to extract a motor speed according to the set duty from the data, and to generate a driving signal according to the extracted motor speed.

In an exemplary embodiment, the extraction of the motor speed according to the set duty may be calculated by a linear interpolation of the data including a stabilized motor speed according to the duty.

In an exemplary embodiment, the data may be stored as a lookup table in a ROM connected to the controller.

In an exemplary embodiment, the controller may include a PI controller determining a target speed and a phase by checking a back electromotive force voltage error; a speed calculator determining a current reflected speed for controlling to the target speed; a PWM signal generator generating a PWM signal having a period and a magnitude according to the speed and the phase; and a zero-current detector detecting a zero-cross timing of a phase current.

In an exemplary embodiment, an AD converter converting the sensed current/voltage may be further included.

As a third aspect of the present invention to achieve the above-mentioned purpose, a device driven by a motor according to the present invention, includes a motor; an inverter configured to deliver a driving signal to the motor; a sensing part configured to sense at least one of a current and a voltage of the motor; and a controller configured to control the inverter, wherein the controller is configured, in response to a set duty according to an operating level set by a user, to load data stored by extracting a stabilized motor speed according to a duty based on a back electromotive force signal received from the motor, to extract a motor speed according to the set duty from the data, and to generate a driving signal according to the extracted motor speed.

EFFECT OF THE INVENTION

According to an exemplary embodiment of the present invention, the following effects are provided.

First, according to one embodiment of the present invention, since the motor may be controlled using data extracted and stored in advance by using a back electromotive force sensed from the motor, the motor may be controlled with a fast response characteristic.

Meanwhile, a floating process may cause an acoustic noise, but according to an embodiment of the present invention, since the floating process does not occur in an actual motor driving process, the motor may be controlled without generating the acoustic noise.

Furthermore, according to another embodiment of the present invention, there are additional technical effects not mentioned here. Those skilled in the art may understand through the entire context of the specification and drawings.

**BRIEF DESCRIPTION OF THE DRAWINGS**

FIG. 1 is a block diagram illustrating a motor driving device according to an embodiment of the present invention.

FIG. 2 is a block diagram illustrating a circuit configuration of a motor driving device according to an embodiment of the present invention.

FIG. 3 is a detailed block diagram illustrating a motor driving device according to an embodiment of the present invention.

FIG. 4 is a flowchart illustrating a data recording process of a motor control method according to an embodiment of the present invention.

FIG. 5 illustrates an example of a table recorded by a data recording process of a motor control method according to an embodiment of the present invention.

FIG. 6 illustrates an example of a graph recorded by a data recording process of a motor control method according to an embodiment of the present invention.

FIG. 7 is a flowchart illustrating a motor driving process of a motor control method according to an embodiment of the present invention.

**BEST MODE FOR CARRYING OUT THE INVENTION**

Hereinafter, embodiments disclosed in the present specification will be described in detail with reference to the attached drawings, but identical or similar components are assigned the same reference numbers regardless of drawing symbols, and redundant descriptions thereof will be omitted. Suffixes "module" and "part" for components used in the following description are assigned or used interchangeably only for convenience of specification drafting and do not have distinct meanings or roles by themselves.

Also, in describing embodiments disclosed in the present specification, if it is determined that a detailed description of related known technology may obscure the gist of the embodiments disclosed in the present specification, the detailed description will be omitted.

Also, it should be noted that the attached drawings are only for facilitating understanding of the embodiments disclosed in the present specification, and the technical idea disclosed in the present specification should not be construed as being limited by the attached drawings.

Furthermore, although each drawing is described for convenience of explanation, it is within the scope of the present invention for those skilled in the art to implement other embodiments by combining at least two or more drawings.

Also, when an element such as a layer, an area, or a substrate is referred to as being present "on" another component, it may be understood that it is directly present on the other element or an intermediate element may exist therebetween.

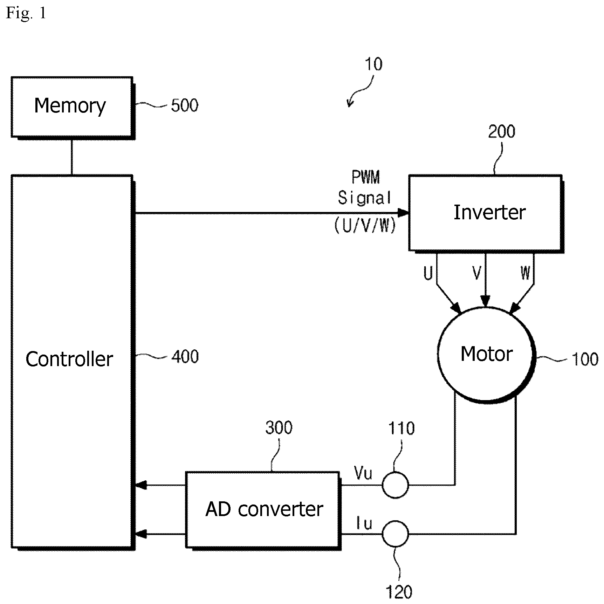

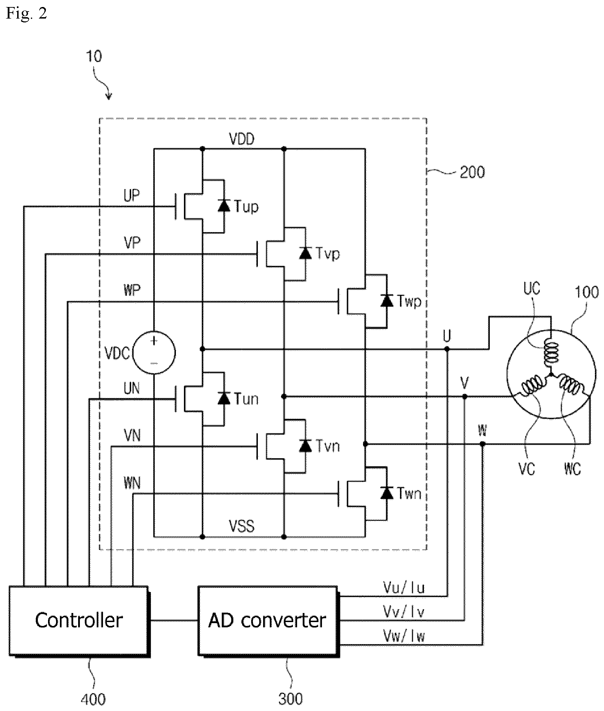

FIG. 1 is a block diagram illustrating a motor driving device according to an embodiment of the present invention. FIG. 2 is a block diagram illustrating a circuit configuration of a motor driving device according to an embodiment of the present invention.

Referring to FIG. 1, a motor driving device 10 according to an embodiment may include driving circuit blocks 200, 300, 400, 500 for driving a motor 100. For example, such a motor driving device 10 may drive a sensorless BLDC (Brushless Direct Current) motor 100. Hereinafter, the motor 100 will be described focusing on an example of a BLDC motor.

Such a motor driving device 10 may include an inverter 200 delivering a driving signal to the motor 100, a voltage sensing part 110 sensing a voltage Vu output from the motor 100, a current sensing part 120 sensing a current Iu output from the motor 100, and a controller 400 controlling the inverter 200 to drive the motor 100.

Here, an example of sensing a voltage and a current of a U phase among three phases to control the motor 100 is shown. Also, the voltage sensing part 110 and the current sensing part 120 may be simply expressed as sensing parts 110, 120. Such sensing parts 110, 120 may sense at least one of the voltage and the current output from the motor 100.

A memory 500 may be selectively connected to the controller 400. The memory 500 may be provided outside the controller 400. However, it goes without saying that the memory 500 may be implemented inside a semiconductor chip such as an MCU (microcontroller unit) constituting the controller 400. For example, such a memory 500 may be implemented as an EEPROM (electrically erasable and programmable read only memory).

For example, referring to FIG. 2, the motor 100 may include a stator including three-phase coils UC, VC, WC having different phases and a rotor using a permanent magnet. In FIG. 2, the memory 500 is omitted. Hereinafter, an example of an inverter 200 driving a sensorless BLDC (Brushless Direct Current) motor 100 will be briefly described.

The stator of the motor 100 may include a first coil UC having a U phase (first phase), a second coil VC having a V phase (second phase), and a third coil WC having a W phase (third phase). The motor 100 may be driven according to a voltage supplied to each of the three-phase coils UC, VC, WC from the inverter 200. In this case, a magnetic force generated from the first to third coils UC, VC, WC may rotate the rotor of the motor 100.

The inverter 200 operates under control of the controller 400 to supply a first power voltage VDD to each of the three-phase coils UC, VC, WC of the motor 100 through each of first to third phases U, V, W, or to supply a second power voltage VSS, or to float the corresponding coil without supplying the first and second power voltages VDD, VSS.

The inverter 200 receives the first power voltage VDD and the second power voltage VSS from a power supplier VDC. The inverter 200 may receive first-first and first-second coil control signals UP, UN, second-first and second-second coil control signals VP, VN, and third-first and third-second coil control signals WP, WN from the controller 400. The coil control signals UP, UN, VP, VN, WP, WN supplied from the controller 400 may be Pulse Width Modulation (PWM) signals.

The inverter 200 may include a first pull-up transistor Tup and a first pull-down transistor Tun connected in series between a supply line of the first power voltage VDD and a supply line of the second power voltage VSS that drive the first coil UC of the motor 100.

Also, the inverter 200 may include a second pull-up transistor Tvp and a second pull-down transistor Tvn connected in series between the supply line of the first power voltage VDD and the supply line of the second power voltage VSS that drive the second coil VC of the motor 100.

The inverter 200 may include a third pull-up transistor Twp and a third pull-down transistor Twn connected in series between a supply line of the first power voltage VDD and a supply line of the second power voltage VSS that drive the third coil WC of the motor 100.

The controller 400 may sense a voltage and current signals sensed from the motor 100 through sensing parts 110, 120. In this case, the current and voltage signals Iu/Vu (in case of sensing a signal of a U phase) sensed by the sensing parts 110, 120 may be converted into a digital signal through an AD converter 300 and input to the controller 400.

When a user operates an electronic device, for example, a home appliance, equipped with the motor 100, the controller 400 may deliver a driving signal to the motor 100 through the inverter 200 in response to a set duty based on a command by the user. That is, for example, a motor driving device 10 including the motor 100 may be the electronic device. For example, the motor driving device 10 may be a home appliance such as a refrigerator, an air purifier, an air conditioner, or the like driven by the motor 100. For example, such a motor driving device 10 may correspond to a device including the motor 100.

According to an embodiment, when the user sets an operating stage (operating level) of the electronic device to operate the electronic device, the controller 400 may generate a driving signal of the motor 100 according to a motor speed extracted according to the operating level.

For example, when the user sets an operating stage (operating level) of the electronic device to operate the electronic device, the controller 400 may load data stored by extracting a stabilized motor speed according to a duty based on a back electromotive force (BEMF) signal received from the motor 100.

Thereafter, the controller 400 may extract a motor speed according to the set duty from the loaded data. Accordingly, the controller 400 may generate a driving signal according to the extracted motor speed.

A back electromotive force (BEMF) signal is a voltage or an electromotive force generated by pushing against a current inducing it. The BEMF is a voltage drop of an alternating current (AC) circuit due to magnetic induction. Generally, for example, when driving a BLDC motor through two of three coils of a three-phase BLDC motor, the BEMF signal may be received through an unused coil. In this case, the unused coil may be expressed as being floated.

As an embodiment, the data stored by extracting a stabilized motor speed according to a duty based on the back electromotive force (BEMF) signal received from the motor 100, as described above, may be pre-recorded in a memory 500. That is, the data may be pre-recorded depending on the motor 100.

In an exemplary embodiment, such data may include a stabilized speed according to a command corresponding to an inflection point of an operating range of the motor 100. As such, the data may include a table of a stabilized speed for a (PWM) duty for driving the motor 100. Such a table may be stored in the memory 500 as a lookup table.

As mentioned above, the data may be received by a temporarily unused coil (a floated coil) among three-phase coils connected to the motor 100.

When the motor 100 operates, for example, when an operation command is issued to the motor 100, a process of extracting a motor speed may be calculated by a linear interpolation of data including a speed according to a duty. Here, a set duty based on an operation command by a user may be set according to an operating level of a device equipped with the motor 100.

This process will be described in detail later with reference to drawings.

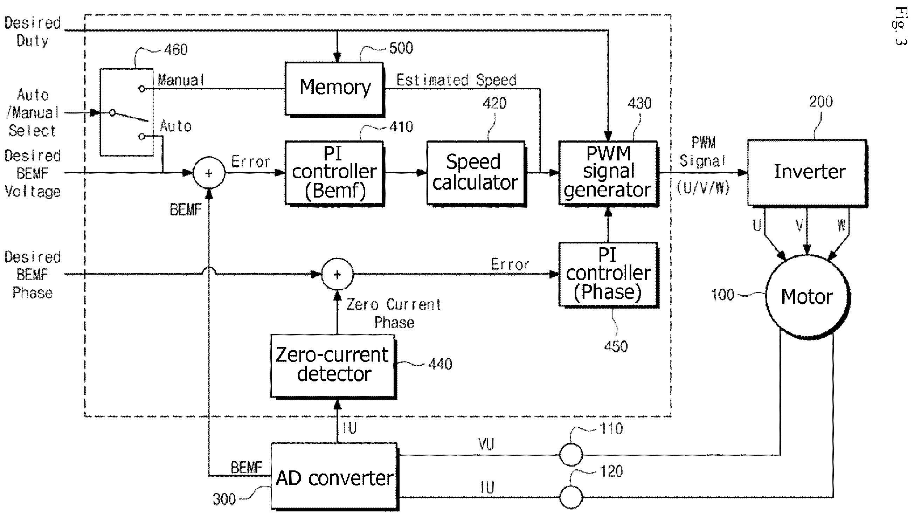

FIG. 3 is a detailed block diagram illustrating a motor driving device according to an embodiment of the present invention.

Referring to FIG. 3, a specific implementation example of the controller 400 is shown. Here, the controller 400 may use a proportional-integral control method.

In an exemplary embodiment, the controller 400 may include PI controllers 410, 450 to determine a target speed and a phase by checking a back electromotive force voltage error, a speed calculator 420 to determine a current reflected speed for controlling to the target speed, and a PWM signal generator 430 to generate a PWM signal having a period and a magnitude according to the speed and the phase.

Also, since recording of "data extracted and stored by a stabilized motor speed according to a duty based on a back electromotive force (BEMF) signal" is performed at a floating timing of one phase (for example, a U phase), the controller 400 may include a zero-current detector 440 to detect a zero-cross timing of a phase current. Such a zero-current detector 440 may be connected to an AD converter 300.

One PI controller 410 may determine a speed according to a back electromotive force voltage error, and the other PI controller 450 connected to the zero-current detector 440 may determine a phase to detect a zero-cross timing. As such, although the PI controllers 410, 450 are composed of two parts, it goes without saying that they may be implemented as one block.

In a switch (Auto/Manual select) 460 for automatic/manual selection, it may be set to manual for initial data recording. For example, such a switch 460 may be a logical switch implemented within the controller 400.

Here, "Desired Duty" may correspond to a user command. When a user command is input, data pre-recorded through a memory 500 may be read and delivered to the PWM signal generator 430.

Once data is manually recorded initially, subsequent processes may be performed automatically in the controller 400. For example, a user command may be connected to the PI controllers 410, 450 to determine a target speed of the motor 100 considering a back electromotive force voltage error.

Thereafter, the speed calculator 420 may determine a current reflected speed for controlling the motor 100 to the target speed. Then, the PWM signal generator 430 may generate a PWM signal having a period and a magnitude according to the determined speed and phase.

In this case, in the PWM signal generator 430, a linear interpolation calculation of the data extracted and recorded in the memory 500 may be performed. Therefore, a PWM signal having a period and a magnitude according to the speed and phase determined by such calculation may be generated.

Meanwhile, for example, a data recording process may be performed in a state where a voltage is not applied to the U phase (U phase floating). That is, a voltage sensed by the sensing parts 110, 120 in the U phase when the U phase is floated and no voltage is applied to the U phase corresponds to a back electromotive force (BEMF) voltage.

Such a back electromotive force voltage may be converted into a digital signal by the AD converter 300 and applied to the zero-current detector 440. The zero-current detector 440 may detect a zero-cross point where a U phase current switches from a negative phase to a positive phase.

A back electromotive force voltage Vu detected in the U phase may be compared and operated with an ideal back electromotive force voltage ("Desired BEMF Voltage"). The ideal back electromotive force voltage may correspond to Vdd/2. As such, a condition where the back electromotive force voltage is Vdd/2 may correspond to a zero-cross point of the U phase current. Therefore, floating of the U phase may be performed at the zero-cross point of the U phase current. Meanwhile, a phase of the back electromotive force voltage Vu detected in the U phase may be compared and operated with a phase of the ideal back electromotive force voltage ("Desired BEMF Phase").

As such, a phase of an ideal back electromotive force voltage signal and a phase of a U phase voltage are compared, and a phase based on a user command may be determined in the PI controller 450.

Through such a process, a linear interpolation calculation of data recorded in the memory 500 is performed according to a duty based on a user command, and a PWM signal having a period and a magnitude according to a speed and a phase determined by such calculation may be applied to the inverter 200.

As such, since the motor 100 may be controlled using data extracted and recorded in advance, the motor 100 may be controlled with a fast response characteristic.

Meanwhile, a floating process may cause an acoustic noise, but according to an embodiment of the present invention described above, since the floating process does not occur in a control process, the motor 100 may be controlled without generating such acoustic noise.

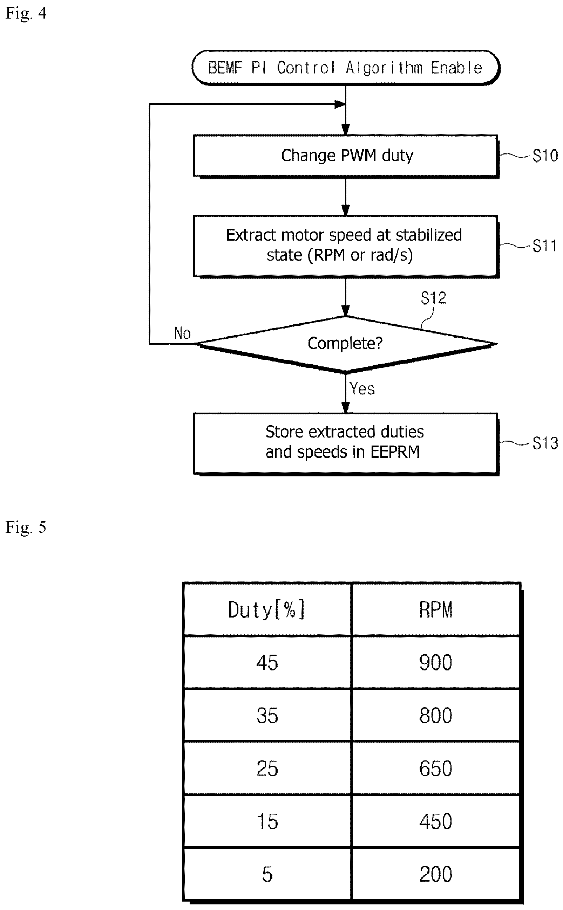

FIG. 4 is a flowchart illustrating a data recording process of a motor control method according to an embodiment of the present invention.

As described above, before an electronic device 10 equipped with the motor 100 is initially driven, data may be stored by extracting a stabilized motor speed according to a duty based on a back electromotive force (BEMF) signal.

Referring to FIG. 4, such a process of extracting and storing data is shown.

Here, the data may correspond to a stabilized speed of the motor 100 according to each point in a duty range of the motor 100. For example, at each point corresponding to an inflection point within a duty range in which the motor 100 is driven, a speed of the motor 100 stabilized at the duty may be extracted and stored as data.

This process will be described with reference to FIG. 4.

First, a process of changing a PWM duty may be performed in step S10. This process may correspond to a process of changing a command within a duty range for data extraction. For example, a duty may be designated as a point corresponding to an inflection point within an operating range of the motor 100. That is, a range of a motor operating duty may be set, and an inflection point value may be designated within this range.

Thereafter, a motor speed in a stabilized state at the duty may be extracted in step S11. Here, the motor speed may be stored as revolutions per minute (RPM) or radians per second (rad/s). For example, a stabilized motor speed at the inflection point may be extracted.

This process may be performed at each point within the duty range, for example, at each inflection point. Therefore, a process of checking whether a motor speed has been extracted for all points may be performed in step S12. As described above, such extraction of the motor speed may be performed, for example, in a state where the U phase is floated.

If the motor speeds have been extracted for all points, the extracted duties and the speeds corresponding to the respective duties may be stored in the memory 500 in step S13. For example, the inflection point value and the motor speeds may be stored.

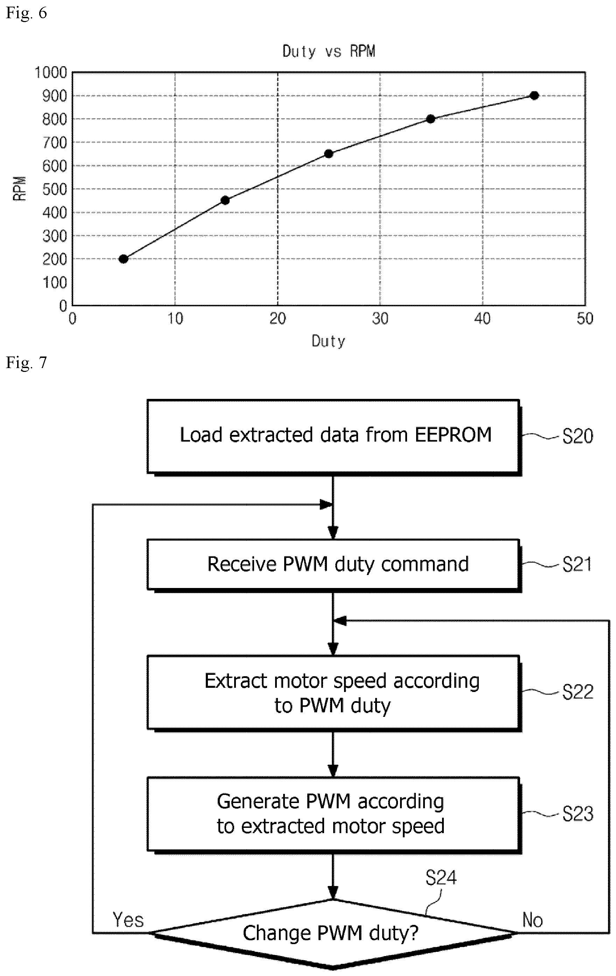

FIG. 5 illustrates an example of a table recorded by a data recording process of a motor control method according to an embodiment of the present invention. Also, FIG. 6 illustrates an example of a graph recorded by a data recording process of a motor control method according to an embodiment of the present invention.

As mentioned above, duties and speeds according to the duties may be stored in a lookup table form, as shown in FIG. 5.

FIG. 5 illustrates, for example, a table showing motor (RPM) speeds (RPM) for duties of 5, 15, 25, 35, and 45%.

Meanwhile, a duty and a speed according to the duty may be expressed in a graph form having the duty and the speed as axes, as shown in FIG. 6.

FIG. 6 illustrates a graph with a horizontal axis representing a duty and a vertical axis representing a speed (RPM) in an approximately linear form.

FIG. 7 is a flowchart illustrating a motor driving process of a motor control method according to an embodiment of the present invention.

As described above, when a user sets an operating stage (operating level) of an electronic device to operate the electronic device (for example, a home appliance), a controller 400 may load data stored by extracting a stabilized motor speed according to a duty based on a back electromotive force (BEMF) signal received from a motor 100, and may extract a motor speed according to the set duty from the loaded data. Accordingly, the controller 400 may generate a driving signal of the motor 100 according to the extracted motor speed.

Referring to FIG. 7, such a driving process of the motor 100 will be described step by step. This driving process may be performed in the controller 400.

First, data stored by extracting a stabilized motor speed according to a duty based on a back electromotive force (BEMF) signal received from the motor 100 may be loaded from the memory (EEPROM) 500 in step S20.

Thereafter, a command may be received from a user in step S21. Such a user command may occur when a driving signal of the motor 100 is input, for example, when the user operates a device such as a home appliance or an electronic device equipped with the motor 100.

For example, when the user operates a device equipped with the motor 100 at a specific operating level, a PWM duty command according to the operating level may be received.

Then, a target motor speed according to the PWM duty command may be extracted in step S22. This motor speed extraction process may be calculated by a linear interpolation of data including a speed according to the duty command.

As such, a target motor speed may be obtained using a linear interpolation calculation of data recorded in the memory 500. Here, referring to FIG. 6, considering an X-axis as a duty value and a Y-axis as a speed (RPM), a linear interpolation formula may be as follows. Here, N is a number of duty levels.

[Equation 1]

$$Y = Y[N-1] + (Y[N] - Y[N-1]) * (X[C] - X[N-1]) / (X[N] - X[N-1])$$

In this case, when a duty command is 10 according to the extracted data, based on a table shown in FIG. 5, a speed (RPM) corresponding to between a duty of 5 and 15 may be calculated. Through this process, a target speed of a motor 100 may be calculated as follows.

$$X[0] = 5, X[1] = 15, Y[0] = 200, Y[1] = 450.$$

$$Y = 200 + (450 - 200) * (10 - 5)/(15 - 5) = 325.$$

Thereafter, the controller 400 may generate a driving signal (PWM signal) according to the extracted motor speed in step S23.

In some cases, depending on whether a user has changed an operating level, for example, whether a PWM duty has been changed in step S24, a process after step S21 may be repeated.

As such, a device equipped with the motor 100 and driven by the motor 100 may be operated by steps S20 to S24 described above.

The above description is merely illustrative of a technical idea of the present invention, and those skilled in the art to which the present invention pertains may make various modifications and variations within a scope not departing from essential characteristics of the present invention.

Therefore, embodiments disclosed in the present invention are not intended to limit a technical idea of the present invention but to explain it, and a scope of the technical idea of the present invention is not limited by such embodiments.

A protection scope of the present invention should be interpreted by the following claims, and all technical ideas within a scope equivalent thereto should be construed as being included in a right scope of the present invention.

**INDUSTRIAL APPLICABILITY**

According to the present invention, a device for driving a direct current motor (DC motor), a control method thereof, and a device (electronic device) driven by the motor may be provided.

**Claims**

1.    A method of controlling a BLDC motor, comprising:

loading data stored by extracting a stabilized motor speed according to a duty based on a back electromotive force signal received from a motor;

receiving a set duty based on a command by a user;

extracting a motor speed according to the set duty from the data; and

generating a driving signal according to the extracted motor speed.

2. The method of controlling a motor according to claim 1, wherein the data includes a stabilized speed according to a command corresponding to an inflection point of an operating range of the motor.

3. The method of controlling a motor according to claim 1, wherein the extracting the motor speed comprises calculating by a linear interpolation of data including the speed according to the duty.

4. The method of controlling a motor according to claim 1, wherein the set duty based on the command by the user is set according to an operating level of a device equipped with the motor.

5. The method of controlling a motor according to claim 1, wherein the data is stored as a lookup table.

6. A motor driving device, comprising:

an inverter configured to deliver a driving signal to a motor;

a current/voltage sensing part configured to sense a current and a voltage of the motor;

a controller configured to control the inverter,

wherein the controller is configured,

in response to a set duty based on a command by a user, to load data stored by extracting a stabilized motor speed according to a duty based on a back electromotive force signal received from the motor, to extract a motor speed according to the set duty from the data, and to generate a driving signal according to the extracted motor speed.

7. The motor driving device according to claim 6, wherein the data includes a stabilized speed according to a command corresponding to an inflection point of an operating range of the motor.

8. The motor driving device according to claim 6, wherein the extraction of the motor speed according to the set duty comprises calculating by a linear interpolation of data including a stabilized motor speed according to the duty.

9. The motor driving device according to claim 6, wherein the set duty based on the command by the user is set according to an operating level of a device equipped with the motor.

10. The motor driving device according to claim 6, wherein the data is stored as a lookup table in a ROM connected to the controller.

Fig. 1

Fig. 2

Fig. 3

Fig. 4

BEMF PI Control Algorithm Enable

Change PWM duty —S10

Extract motor speed at stabilized
state (RPM or rad/s) —S11

S12

No ◇ Complete? ◇

Yes

Store extracted duties
and speeds in EEPRM —S13

Fig. 5

| Duty[%] | RPM |
|---------|-----|
| 45 | 900 |
| 35 | 800 |
| 25 | 650 |
| 15 | 450 |
| 5 | 200 |

Fig. 6

Duty vs RPM

Fig. 7

| Load extracted data from EEPROM | S20 |

Receive PWM duty command — S21

Extract motor speed according to PWM duty — S22

Generate PWM according to extracted motor speed — S23

S24

Yes — Change PWM duty? — No

## INTERNATIONAL SEARCH REPORT

| International application No. |
| --- |
| **PCT/KR2023/018376** |

| A. | CLASSIFICATION OF SUBJECT MATTER |
| --- | --- |
| | **H02P 6/182**(2016.01)i; **H02P 6/10**(2006.01)i |

According to International Patent Classification (IPC) or to both national classification and IPC

| B. | FIELDS SEARCHED |
| --- | --- |

Minimum documentation searched (classification system followed by classification symbols)

H02P 6/182(2016.01); F01P 7/04(2006.01); H02H 7/085(2006.01); H02P 29/02(2006.01); H02P 6/00(2006.01); H02P 6/06(2006.01); H02P 6/08(2006.01); H02P 6/16(2006.01); H02P 7/29(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 모터(motor), 제어(control), 역기전력(back electromotive force), 듀티(duty), 속도 (velocity)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2014-171293 A (MITSUBA CORP.) 18 September 2014 (2014-09-18) See paragraphs [0020]-[0057], and figures 1-8. | 1,4-6,9-10 |
| Y | | 3,8 |
| A | | 2,7 |
| Y | EP 2012426 A2 (SANDEN CORPORATION) 07 January 2009 (2009-01-07) See paragraphs [0014]-[0037] and figures 1-3. | 3,8 |
| A | JP 2006-254693 A (FISHER & PAYKEL APPLIANCES LTD.) 21 September 2006 (2006-09-21) See claims 1-7 and figures 1-11. | 1-10 |
| A | CN 108964538 B (CHENGDU MONOLITHIC POWER SYS.) 13 April 2021 (2021-04-13) See entire document. | 1-10 |

☑ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **28 February 2024** | **28 February 2024** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/018376** |

| C. | DOCUMENTS CONSIDERED TO BE RELEVANT | |
| --- | --- | --- |
| Category* | Citation of document, with indication, where appropriate, of the relevant passages | Relevant to claim No. |
| A | KR 10-2013-0095773 A (DYSON TECHNOLOGY LIMITED) 28 August 2013 (2013-08-28)<br>See entire document. | 1-10 |

Form PCT/ISA/210 (second sheet) (July 2022)

## INTERNATIONAL SEARCH REPORT
### Information on patent family members

International application No.

**PCT/KR2023/018376**

| Patent document cited in search report | | | Publication date (day/month/year) | Patent family member(s) | | | Publication date (day/month/year) |
|---|---|---|---|---|---|---|---|
| JP | 2014-171293 | A | 18 September 2014 | None | | | |
| EP | 2012426 | A2 | 07 January 2009 | EP | 2012426 | A3 | 24 March 2010 |
| | | | | JP | 2009-017690 | A | 22 January 2009 |
| JP | 2006-254693 | A | 21 September 2006 | AU | 2006-200913 | A1 | 21 September 2006 |
| | | | | AU | 2006-200913 | B2 | 11 March 2010 |
| | | | | CA | 2538447 | A1 | 07 September 2006 |
| | | | | EP | 1701437 | A2 | 13 September 2006 |
| | | | | KR | 10-2006-0096931 | A | 13 September 2006 |
| | | | | MX | PA06002636 | A | 18 September 2006 |
| | | | | NZ | 545725 | A | 28 September 2007 |
| | | | | SG | 126054 | A1 | 30 October 2006 |
| | | | | US | 2006-0197482 | A1 | 07 September 2006 |
| | | | | US | 7141949 | B2 | 28 November 2006 |
| CN | 108964538 | B | 13 April 2021 | None | | | |
| KR | 10-2013-0095773 | A | 28 August 2013 | CN | 103262406 | A | 21 August 2013 |
| | | | | CN | 103262406 | B | 06 April 2016 |
| | | | | EP | 2625778 | A2 | 14 August 2013 |
| | | | | EP | 2625778 | B1 | 20 July 2016 |
| | | | | GB | 2484289 | A | 11 April 2012 |
| | | | | GB | 2484289 | B | 20 November 2013 |
| | | | | JP | 2012-080766 | A | 19 April 2012 |
| | | | | JP | 5524925 | B2 | 18 June 2014 |
| | | | | KR | 10-1404564 | B1 | 09 June 2014 |
| | | | | US | 2012-0081064 | A1 | 05 April 2012 |
| | | | | US | 8841876 | B2 | 23 September 2014 |
| | | | | WO | 2012-046018 | A2 | 12 April 2012 |
| | | | | WO | 2012-046018 | A3 | 11 April 2013 |

Form PCT/ISA/210 (patent family annex) (July 2022)